# EUROPEAN PATENT SPECIFICATION

(11) **EP 4 532 952 B1**
(45) Date of publication and mention of the grant of the patent: **06.05.2026**
(21) Application number: 23735375.0
(22) Date of filing: 26.05.2023
(51) Int. Cl.: F16D 65/12, F16D 69/02, F16D 65/02

(54) **BRAKE DISC FOR DISC BRAKES AND METHOD FOR MAKING SUCH A DISC BRAKE**
BREMSSCHEIBE FÜR SCHEIBENBREMSEN UND VERFAHREN ZUR HERSTELLUNG EINER SOLCHEN SCHEIBENBREMSE
DISQUE DE FREIN POUR FREINS À DISQUE ET PROCÉDÉ DE FABRICATION D'UN TEL FREIN À DISQUE

(30) Priority: 01.06.2022 IT 202200011636
(43) Date of publication of application: 09.04.2025
(73) Proprietor: Brembo S.p.A., 24035 Curno (Bergamo) (IT)
(72) Inventor: MILANESI, Andrea, 24035 Curno, Bergamo (IT); MELDINI, Fabio, 24035 Curno, Bergamo (IT); MANCINI, Alessandro, 24035 Curno, Bergamo (IT)
(74) Representative: Zanettin, Gianluigi
(86) International application number: PCT/IB2023/055406
(87) International publication number: WO 2023/233253

(56) References cited:
- WO-A1-2009/026458
- WO-A1-2010/089047
- WO-A1-2019/021161
- DE-A1- 19 608 952
- US-A1- 2011 048 871

## Description

### Field of application

The present invention relates to a brake disc for disc brakes and to a method for making such a brake disc.

### Background art

WO 2009/026458 A1 discloses a brake disk for a brake device, with a disk body with oppositely directed surfaces comprising a set of spaced and raised island formations, where each raised island formation has outer friction surface to contact brake pad

A brake disc of a disc braking system of a vehicle or motorcycle comprises an annular structure or braking band. Generally, the brake disc is provided with a central fixing element, known as the bell, by means of which the disc is fixed to the rotating part of a suspension of a vehicle or motorcycle, e.g., a hub. Brake disc solutions can be provided, in which the braking band is fixed directly onto the rotating part of the suspension, e.g., a hub or wheel rim, without the interposition of a bell. The braking band is provided with opposing braking surfaces adapted to cooperate with friction elements (brake pads), housed in at least one calliper body placed straddling such a braking band and integral with a non-rotating component of the vehicle suspension. The controlled interaction between the opposite brake pads and the opposite braking surfaces of the braking band results in braking action by friction which allows the deceleration or stopping of the vehicle.

In many cases, especially in motorcycles, but also in motor vehicles provided with rims with large windows and/or large diameter, the brake disc is clearly visible from the outside of the vehicle, so as to increasingly take an aesthetic value for the users.

Generally, the most common brake discs are made of grey cast iron or steel, in particular stainless steel. Indeed, these materials allow obtaining good braking performance (especially in terms of wear limitation) at a relatively low cost. Discs made of carbon alone or carbon ceramic materials offer much greater performance but at a much higher cost.

The market has also recently seen a growing need to aesthetically characterize grey cast iron or steel brake discs, in order to meet the demands of an increasingly wide range of users.

There is an increasingly popular need among users, in particular of motorcycles, to install brake discs made of grey cast iron or steel, particularly stainless steel, with a braking band having a black or blackish or otherwise darker colour than the starting substrate.

Disc manufacturers have attempted to meet such a need by coating the braking bands with black or blackish-coloured coatings.

However, a coating that allows obtaining a black or blackish or otherwise darker colour than the starting substrate of the braking band while being resistant to high temperatures, wear, abrasion, and corrosion has not yet been identified until now.

In other words, until now, no coating has been found that can be applied to the braking band of brake disc made of grey cast iron or stainless steel which will give it a black or blackish or otherwise darker colour than the starting substrate and will withstand the normal operating conditions of the disc over time.

The only brake discs having black or blackish or otherwise darker colour than the starting substrate which ensure the stability of colour and performance are discs made of carbon alone or carbon ceramic materials. However, such discs have much higher costs than grey cast iron or steel discs.

In the field of brake discs, in particular for motorcycles, the need is strongly felt to make brake discs having a braking band made of grey cast iron or steel, in particular stainless steel, provided with a coating having a black or blackish or otherwise darker colour than the starting substrate and which can withstand the normal operating conditions to which the disc is subjected over time.

### OVERVIEW OF THE INVENTION

It is the object of the present invention to provide a brake disc for disc brakes made of grey cast iron or steel, in particular for motor vehicles or motorcycles, which has a braking band with a black or blackish or otherwise darker colour than the starting substrate and which can withstand the normal operating conditions to which the brake disc is subjected over time.

Such drawbacks are solved by a brake disc made of grey cast iron or steel according to claim 1 and by a method for making such a brake disc according to claim 17.

Other embodiments of the disc brake and of the making method according to the invention are described in the following claims.

### DESCRIPTION OF THE DRAWINGS

Further features and advantages of the present invention will be more comprehensible from the following description of preferred embodiments thereof, given by way of non-limiting examples, in which:

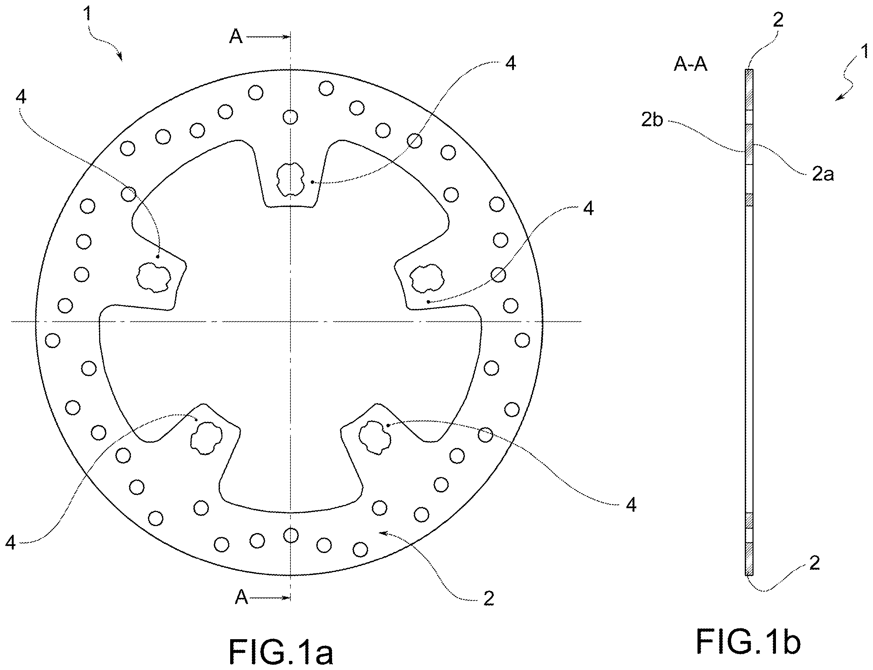

- figure 1a shows a top plan view of a disc brake according to an embodiment of the present invention;
- figure 1b shows a section view of the brake disc in figure 1 taken along the section plane A- A indicated thereon;
- figure 2a shows figure 1b with some parts illustrated out of proportion for illustration needs;
- figure 2b shows figure 1b with some parts illustrated out of proportion for illustration needs in relation to an embodiment of the invention alternative to that illustrated in figure 2a;
- figure 3a shows a picture of a brake disc with a black or blackish braking band, made according to the present invention;
- figure 3b shows an enlarged detail of the picture in figure 3a;
- figure 4a shows a picture of a brake disc similar to that shown in the picture in figure 2, but with a conventional braking band having the colour of stainless steel; and
- figure 4b shows an enlarged detail of the picture in figure 4a.

Elements or parts of elements common to the embodiments described below will be indicated using the same reference numerals.

### DETAILED DESCRIPTION

With reference to the aforesaid figures, reference numeral 1 indicates as a whole a brake disc according to the present invention.

According to a general constructional solution of the invention, shown in the accompanying figures, the disc brake 1 comprises a braking band 2, provided with two opposite braking surfaces 2a and 2b, each of which at least partially defines one of the two main faces of the disc 1.

In particular, the brake disc 1 can be of the ventilated type.

Advantageously, the brake disc 1 can be provided with a portion adapted to fix the disc to a vehicle.

Generally, if the brake disc is for motorcycles, the fixing portion is a wheel hub connection element referred as a bell. Alternatively, as shown in the accompanying figures, the fixing portion can consist of either a plurality of appendages 4 radially extending into the braking band by connecting directly to the wheel hub or a plurality of appendages radially extending outside the braking band by connecting to the outermost portion of the rim (peripheral brake disc).

Generally, if the brake disc is for motor vehicles, the fixing portion is a wheel hub connection element referred to as a bell. Alternatively, the fixing portion can consist of a plurality of appendages radially extending outside the braking band by connecting to the outermost portion of the rim (peripheral brake disc).

The bell in a brake disc for motorcycles or motor vehicles (if provided) can be made in one piece with the braking band or be made separately and then fixed to the braking band by means of appropriate connecting elements or by means of other technological processes (i.e., co-casting) .

The fixing portion of a brake disc for motorcycles or motor vehicles (whether it consists of a bell or pluralities of appendages) can be made of the same material as the braking band, such as steel or grey cast iron, or of another suitable material, such as aluminium alloy. In particular, the entire disc (i.e., the braking band and the fixing portion) can be made of stainless steel.

The braking band 2 is made by casting. Similarly, the fixing portion and/or the bell can be made by casting.

Preferably, if the brake disc is for motorcycles, the braking band with the fixing portion thereof is made by blanking.

Preferably, if the brake disc is for motor vehicles, the braking band and the bell can both be obtained by casting; or the braking band can be obtained by blanking and the bell by casting; or the braking band can be obtained by casting and the bell by deep drawing.

The fixing portion can be made in a single body with the braking band (as shown in the accompanying figures) or can be made as a separate body, mechanically connected to the braking band.

The braking band 2 is made of grey cast iron or steel, preferably stainless steel.

According to the preferred embodiment shown in the accompanying figures, the brake disc 1 is a brake disc for motorcycles. However, the brake disc 1 can also be a brake disc for motor vehicles.

The disc 1 comprises a surface coating 3 covering at least one of the two braking surfaces of the braking band.

According to the invention, the aforesaid surface coating 3 is based on a mixture of one or more aluminium oxides and one or more titanium oxides. Such a surface coating 3 has a darker colour than that of the steel of the braking band 2.

The aforesaid surface coating 3 consists of:
- 55% to 95% by weight of one or more aluminium oxides;
- 5% to 45% by weight of one or more titanium oxides; and
- 0% to 40% by weight of one or more oxides selected from the group consisting of manganese oxides, iron oxides, and nickel oxides. Preferably, said of one or more oxides, if provided, are selected from the group consisting of MnO, MnO₂, Mn₂O₃, FeO, Fe₃O₄ and Ni₂O₃.

The aforesaid surface coating 3 can consist of a mixture of one or more aluminium oxides and one or more titanium oxides.

In this case, the surface coating 3 preferably consists of 70% to 95% by weight of alumina (Al₂O₃) and the rest of titanium dioxide (TiO₂). Even more preferably, the surface coating 3 consists of 85% to 90% by weight of alumina (Al₂O₃) and the rest of titanium dioxide (TiO₂).

Alternatively, said surface coating 3 can comprise - in addition to said one or more aluminium oxides and said one or more titanium oxides - other metal oxides adapted to accentuate the black or blackish or otherwise darker colour of the starting substrate that already characterizes the surface coating 3 consisting only of a mixture of one or more aluminium oxides and one or more titanium oxides.

In this case, the aforesaid surface coating 3 preferably consists of:
- 55% to 85% by weight of one or more aluminium oxides;
- 10% to 40% by weight of one or more titanium oxides; and
- 5% to 35% by weight of one or more oxides selected from the group consisting of manganese oxides, iron oxides and nickel oxides. Preferably, said one or more oxides are selected from the group consisting of MnO, MnO₂, Mn₂O₃, FeO, Fe₃O₄ and Ni₂O₃.

According to a preferred embodiment, the aforesaid surface coating 3 consists of:
- 70% to 85% by weight of alumina (Al₂O₃);
- 10% to 25% by weight of titanium dioxide (TiO₂);
- 5% to 20% of one or more oxides selected from the group consisting of MnO, MnO₂, Mn₂O₃, FeO, Fe₃O₄ and Ni₂O₃.

In particular, the thickness of the surface coating 3 can be between 10um and 500um. Preferably, the thickness of the surface coating 3 is between 30um and 350um, and even more preferably between 50um and 250um. The choice of such a range of values allows achieving an optimum balance between the consumption of the protective coating layer and the limitation of the thermal expansions on the coating itself. In other words, if the thickness of the protective coating were less than 10um, in case of wear, it would be totally removed in a too short time. A thickness above 500 µm, on the other hand, could result in an imperfect adhesion over time, due to thermal expansions occurring during the life cycle of a disc brake.

Preferably, the surface coating 3 is a layer obtained by depositing the material in particulate form (e.g., powder), which will form the coating by means of one of the following deposition techniques: APS (Atmospheric Plasma Spray); HVOF (High-Velocity Oxygen Fuel); HVAF (High-Velocity Air Fuel); KM (Kinetic Metallisation); laser cladding (or Laser Metal Deposition, LMD); or cold spray.

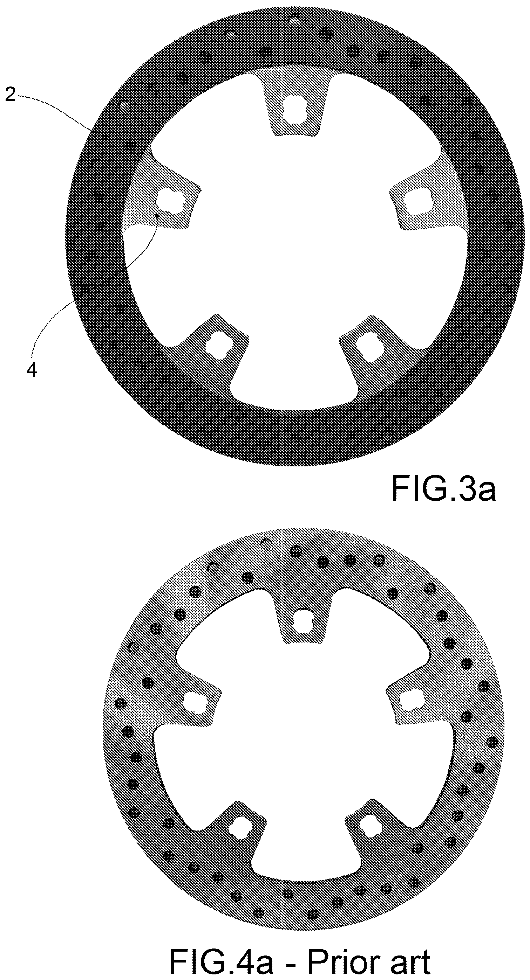

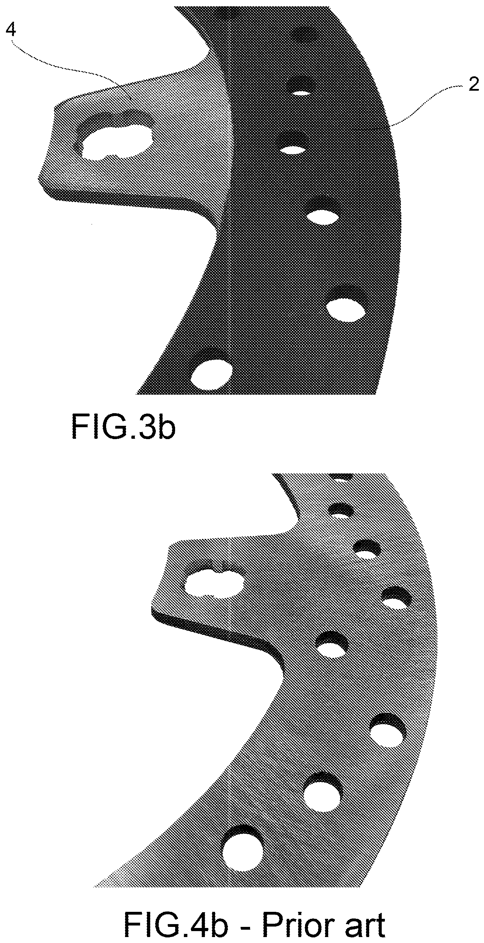

As apparent from a comparison between the pictures in figure 3a and 3b and the pictures in figure 4a and 4b, the aforesaid surface coating 3 has a darker colour than the stainless steel. In particular, the aforesaid surface coating 3 has a black or blackish or otherwise darker colour than the starting substrate. This can also be seen by observing only figures 3a-b, considering the different colour of the coated braking band (black or blackish or otherwise darker than the starting substrate) and the uncoated fixing portion of the braking band (plurality of appendages 4).

This allows differentiating the colour of the braking band from the traditional colour of stainless steel or grey cast iron, thus meeting the market needs.

Moreover, it was possible to verify experimentally that the surface coating 3 has a micro-hardness between 1100 and 1300 HV₃₀₀.

Such hardness values are higher than hardness values of the order of 400 HV₃₀₀, which are typical of the hardened stainless steels normally used to make brake discs.

By virtue of such hardness values of the surface coating 3, the brake disc 1 according to the invention has a longer service life than a conventional brake disc made of hardened stainless steel without coating or made of grey cast iron without coating.

Moreover, it was also experimentally found that, compared with a conventional brake disc made of hardened stainless steel or grey cast iron, the brake disc 1 with a coated braking band according to the invention has:
- greater resistance to wear and abrasion;
- greater resistance to high temperatures;
- greater corrosion resistance.

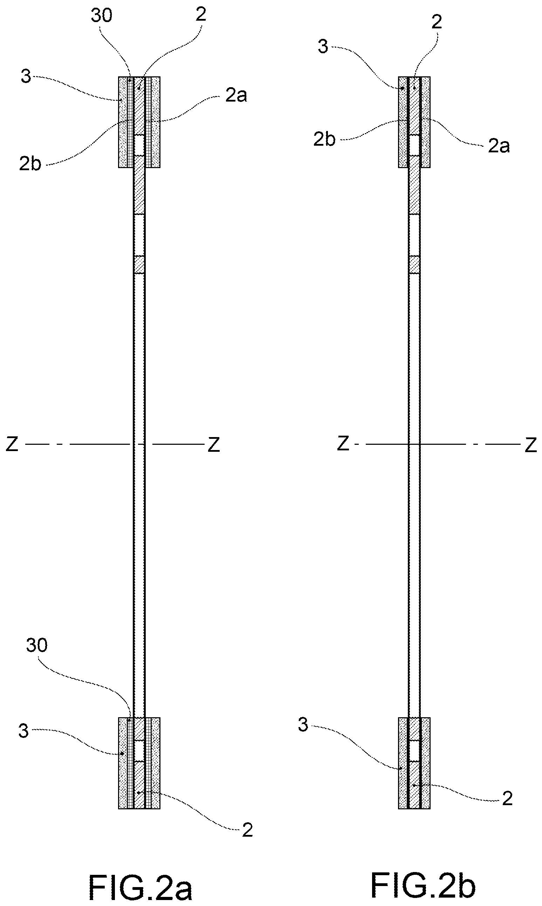

As diagrammatically shown in figure 2b, the surface coating 3 can be in direct contact with the braking surface of the braking band. In this case, the surface coating 3 is the only coating on the brake disc 1.

Alternatively, as diagrammatically shown in figure 2a, the brake disc 1 can comprise a base coating 30 arranged below the surface coating 3 and in direct contact with the braking surface of the braking band.

In this case, the brake disc 1 is provided with:
- a base coating 30 covering at least one of the two braking surfaces of the braking band and is made in direct contact with such a surface; and
- a surface coating 3 covering at least one of the two braking surfaces of the braking band and is made to cover the aforesaid base coating 30.

The aforesaid base coating 30 consists of nickel and/or nickel carbides, aluminium and/or aluminium oxides, or a mixture of nickel and/or nickel carbides and aluminium and/or aluminium oxides.

Preferably, the aforesaid base coating 30 consists of 75 % to 95% by weight of nickel and/or nickel carbides and the rest of aluminium and/or aluminium oxides. Even more preferably, the aforesaid base coating 30 consists of 90% to 95% by weight of nickel and/or nickel carbides and the rest of aluminium and/or aluminium oxides.

Alternatively, the aforesaid base coating 30 can consist of 100% by weight of nickel and/or nickel carbides or 100% by weight of aluminium and/or aluminium oxides.

In particular, the base coating 30 has a thickness between 10um and 500um, preferably between 30um and 350um, and even more preferably between 50µm and 150um.

Preferably, the base coating 30 is a layer obtained by depositing the material in particulate form (e.g., powder), which will form the coating by means of one of the following deposition techniques: APS (Atmospheric Plasma Spray); HVOF (High-Velocity Oxygen Fuel); HVAF (High-Velocity Air Fuel); KM (Kinetic Metallisation); laser cladding (or Laser Metal Deposition, LMD); or cold spray.

Advantageously, the base coating 30 performs a mechanical "anchoring" function for the surface coating 3, which has a colouring and anti-wear function instead. Indeed, the base coating 30 formed from nickel/nickel oxides and/or aluminium/aluminium oxides has an intermediate coefficient of thermal expansion between the base material (steel or grey cast iron) and the surface coating 3 formed from one or more aluminium oxides, one or more titanium oxides, and possibly manganese oxides, iron oxides, and nickel oxides. This gives base coating 30 the ability to dampen the differences in thermal expansion between the base material and the surface coating 3, thus reducing the risk of causing cracks and fissures in the protective surface coating 3.

As for the anti-wear and colouring function, the protective surface coating 3 is not affected by the presence of the protective base coating 30.

As mentioned above, the surface coating 3 and the base coating 30 (if provided) cover at least one of the two braking surfaces of the braking band.

Preferably, as shown in figures 2a and 2b, the braking band 2 is coated at both the braking surfaces 2a and 2b thereof.

In particular, the surface coating 3 and the base coating 30, if provided, can cover only the braking band on a single braking surface or on both braking surfaces.

According to embodiments not shown in the accompanying figures, the surface coating 3 and the base coating 30, if provided, can also extend to other parts of the disc 1, such as the annular fixing portion 4 and the bell (is provided) to cover the entire surface of disc 1. In particular, the surface coating 3 and the base coating 30, if provided, can cover - in addition to the braking band - only the fixing portion or only the bell. The choice is dictated by essentially aesthetic reasons, to have an even colour and/or finishing on the entire disc or between some portions thereof.

One reason why it would be convenient to coat the entire brake disc 1 is to avoid corrosive/oxidative phenomena, especially related to the contact portion between bell and hub, which can make the assembly difficult or create malfunctions (change in flatness of the mating surfaces).

Advantageously, at least one portion of said at least one braking surface 2a or 2b covered by said surface coating 3 or base coating 30 (if provided) can consist of an activated surface having a rough profile. Such a rough profile is filled with the coating.

In particular, such a rough profile can be defined by one or more grooves or channels, each of which is delimited by at least one pair of protuberances.

Such an activated surface can be obtained by subjecting (before the deposition of the coating) the braking surface to a processing adapted to increase the surface roughness thereof by chip-removal machining or laser engraving or plastic deformation.

Operatively, the activated surface is functional to increase the adhesive capacity of the surface coating 3 deposited on the braking surface.

For simplicity of disclosure, the brake disc 1 will now be described along with the method according to the present invention. The brake disc 1 is preferably, but not necessarily, made by the method according to the invention described below.

According to a general implementation of the method according to the invention, the method comprises the following operating steps:
- a) preparing a brake disc, comprising a braking band 2 provided with two opposite braking surfaces 2a, 2b, each of which at least partially defines one of the two main faces of the disc, the braking band being made of grey cast iron or steel, preferably stainless steel;
- b) depositing on the brake disc a layer of particulate material based on a mixture of one or more aluminium oxides and one or more titanium oxides, forming a surface coating 3 covering at least one of the two braking surfaces of the braking band.

The aforesaid surface coating 3 has a darker colour than the steel of braking band 2.

The particulate material deposited in the step b) of deposition to make the surface coating 3 consists of:
- 55% to 95% by weight of one or more aluminium oxides;
- 5% to 45% by weight of one or more titanium oxides; and
- 0% to 40% by weight of one or more oxides selected from the group consisting of manganese oxides, iron oxides, and nickel oxides.

Preferably, said of one or more oxides, if provided, are selected from the group consisting of MnO, MnO₂, Mn₂O₃, FeO, Fe₃O₄ and Ni₂O₃.

The particulate material deposited during step b) of deposition to make the surface coating 3 can consist of a mixture of one or more aluminium oxides and one or more titanium oxides.

In this case, the particulate material deposited in step b) preferably consists of 70% to 95% by weight of alumina Al₂O₃ and the rest of titanium dioxide TiO2. Even more preferably, the particulate material deposited in step b) consists of 85% to 90% by weight of alumina Al2O3 and the rest of titanium dioxide TiO₂.

Alternatively, the particulate material deposited in step b) of deposition to make the surface coating 3 can comprise - in addition to said one or more aluminium oxides and said one or more titanium oxides - other metal oxides adapted to accentuate the black or blackish or otherwise darker colour of the starting substrate that already characterizes the surface coating 3 consisting only of a mixture of one or more aluminium oxides and one or more titanium oxides.

In this case, the particulate material deposited in step b) preferably consists of:
- 55% to 85% by weight of one or more aluminium oxides;
- 10% to 40% by weight of one or more titanium oxides; and
- 5% to 35% by weight of one or more oxides selected from the group consisting of manganese oxides, iron oxides and nickel oxides. Preferably, said one or more oxides are selected from the group consisting of MnO, MnO₂, Mn₂O₃, FeO, Fe₃O₄ and Ni₂O₃.

According to a preferred embodiment, the particulate material deposited in step b) consists of:
- 70% to 85% by weight of alumina (Al₂O₃);
- 10% to 25% by weight of titanium dioxide (TiO₂);
- 5% to 20% of one or more oxides selected from the group consisting of MnO, MnO₂, Mn₂O₃, FeO, Fe₃O₄ and Ni₂O₃.

Advantageously, the surface coating 3 obtained at the end of step b) of deposition has a black or blackish or otherwise darker colour than the starting substrate.

Advantageously, the surface coating 3 obtained at the end of step b) of deposition has a micro-hardness between 1100 and 1300 HV₃₀₀.

Preferably, step b) of deposition is carried out to obtain a thickness of the surface coating 3 between 10um and 500um, preferably between 30um and 350um, and even more preferably between 50um and 250um.

As mentioned above, the choice of such a range of values allows achieving an optimal balance between the consumption of the protective coating layer and the limitation of the thermal expansions on the coating itself. In other words, if the thickness of the protective coating were less than 10um, in case of wear, it would be totally removed in a too short time. A thickness above 500 µm, on the other hand, could result in an imperfect adhesion over time, due to thermal expansions occurring during the life cycle of a disc brake.

Preferably, the surface coating 3 is obtained by carrying out step b) by means of one of the following deposition techniques: APS (Atmospheric Plasma Spray); HVOF (High-Velocity Oxygen Fuel); HVAF (High-Velocity Air Fuel); KM (Kinetic Metallisation); laser cladding (or Laser Metal Deposition, LMD); or cold spray.

Advantageously, the material in particulate form deposited in step e) to form the surface coating 3 has a particle size between 5 and 40 µm. The choice of such a range of values allows giving the coating high features of density, hardness and limited porosity. The choice of such a range was made by balancing two opposing needs: porosity reduction and adhesion increase. Particles of smaller particle size (and therefore lower mass) create a less porous and more compact layer, but lower mass means lower kinetic energy during the step of depositing the coating, thus potentially lower adhesion.

The surface coating 3 can be obtained by depositing the particulate material in direct contact with the braking surface of the braking band.

Alternatively, the surface coating 3 can be obtained by depositing the particulate material not in direct contact with the braking surface of the braking band, but above a base coating 30, previously deposited on the braking surface of the braking band 2.

For this purpose, the method preferably comprises a step c) of depositing on the disc a layer of material in a particulate form consisting of nickel and/or nickel carbides, aluminium and/or aluminium oxides, or a mixture of nickel and/or nickel carbides and aluminium and/or aluminium oxides, forming a base coating 30 covering at least one of the two braking surfaces of the braking band in direct contact therewith.

Operatively, such a step (c) is then carried out before the aforesaid step b). The surface coating 3 is deposited above the base coating 30.

Preferably, the particulate material deposited in step c) of deposition to make the aforesaid base coating 30 consists of 75 % to 95% by weight of nickel and/or nickel carbides and the rest of aluminium and/or aluminium oxides. Preferably, the particulate material deposited in step c) consists of 90% to 95% by weight of nickel and/or nickel carbides and the rest of aluminium and/or aluminium oxides.

Preferably, step c) of deposition is carried out to obtain a thickness of the base coating 30 between 10µm and 500um, preferably between 30um and 350um, and even more preferably between 50um and 150um. Within such ranges of thicknesses, the base coating 30 allow to perform the aforementioned damper effect on thermal strain, which helps to preserve the integrity of the surface coating 3.

Preferably, the base coating 30 is obtained by performing step c) by means of one of the following deposition techniques: APS (Atmospheric Plasma Spray); HVOF (High-Velocity Oxygen Fuel); HVAF (High-Velocity Air Fuel); KM (Kinetic Metallisation); laser cladding (or Laser Metal Deposition, LMD); or cold spray.

Advantageously, the material in particulate form deposited in step d) to form the base coating 30 has a particle size between 5 and 40 µm. The choice of such a range of values allows giving the coating high features of density and capacity of adhesion to the deposition surface. The choice of such a range was made by balancing two opposing needs: porosity reduction and adhesion increase. Particles of smaller particle size (and therefore lower mass) create a less porous and more compact layer, but lower mass means lower kinetic energy during the deposition process and thus potentially lower adhesion.

Preferably, both step b) of deposition and the possible step c) of deposition are carried out at an average temperature of deposition on the component not exceeding 250 °C.

Preferably, the method comprises a step d) of preparing the surface on which the base coating 30 (if provided) and the surface coating 3 are to be made. Such a step d) must thus be carried out before carrying out step b) or step c), if included.

In particular, step d) of surface preparation can comprise a sub-step d1) of cleaning the surface with solvents adapted to remove oil or dirt.

Preferably, step d) of preparation can comprise a sub-step d2) of subjecting at least one portion of said at least one braking surface 2a or 2b to a processing adapted to increase the surface roughness thereof by chip-removal machining or laser engraving or plastic deformation, thus forming an activated portion of said braking surface.

Operatively, such a sub-step d2) is functional to increase the adhesive capacity of the base coating 30 (if provided) or the surface coating 3 deposited on the braking surface.

In particular, such a sub-step d2) is functional to make a rough profile on the braking surface, which can be defined by one or more grooves or channels, each of which is delimited by at least one pair of protuberances.

Advantageously, the method can comprise a step e) of surface finishing of the aforesaid surface coating, e.g., by mechanical machining (grinding, turning, brushing, etc.).

In particular, such a surface finish of the coated disc is useful in order to return it to the correct geometric and dimensional operating tolerances, possibly lost during the deposition processes b) and c), and in order to ensure a proper surface roughness aimed at optimizing the tribological contact with the friction elements.

As can be appreciated from the above description, the brake disc according to the invention allows overcoming the drawbacks of the prior art.

The brake disc 1 according to the invention, by virtue of the surface coating 3, has a darker colour than steel or grey cast iron. In particular, the aforesaid surface coating 3 has a black or blackish or otherwise darker colour than the starting substrate. This allows differentiating the colour of the braking band from the traditional colour of stainless steel or grey cast iron, thus meeting the market needs.

The brake disc 1 according to the invention, by virtue of the surface coating 3 covering at least one of the two braking surfaces of the band, has a longer service life than a conventional brake disc made of hardened stainless steel without coating.

Compared with a conventional brake disc made of hardened stainless steel or grey cast iron, the brake disc 1 with coated braking band according to the invention has:
- a black or blackish or otherwise darker colour of the starting substrate at the braking band, at least in the coated surface;
- greater resistance to wear and abrasion resulting in reduced dust emission;
- greater resistance to high temperatures;
- greater corrosion resistance, which ensures more stable working conditions over time.

The surface coating 3 also acts as a thermal barrier for the underlying braking band, by virtue of the lower thermal conductivity of the materials used for the coating compared to steel or grey cast iron.

By virtue of the invention, it is possible to make brake discs made of steel or grey cast iron, having a black or blackish or otherwise darker colour than the starting substrate, at significantly lower costs when compared to brake discs with a black or blackish or otherwise darker colour than the starting substrate currently available on the market, made of carbon alone or carbon ceramic materials.

## Claims

1. Brake disc for disc brake, in particular for motor cycles or motor vehicles, comprising a braking band (2), provided with two opposite braking surfaces (2a, 2b), each of which at least partially defines one of the two main faces of the disc (1), the braking band (2) being made of grey cast iron or steel, preferably stainless steel, said disc comprising a surface coating (3) covering at least one of the two braking surfaces of the braking band,
**characterised in that** said surface coating (3) is based on a mixture of one or more aluminium oxides and one or more titanium oxides, said surface coating (3) having a darker colour with respect to the steel or grey cast iron of the braking band (2) **and in that** said surface coating (3) consists of:
- 55% to 95% by weight of one or more aluminium oxides;
- 5% to 45% by weight of one or more titanium oxides; and
- 0% to 40% by weight of one or more oxides selected from the group consisting of manganese oxides, iron oxides and nickel oxides, preferably MnO, MnO₂, Mn₂O₃, FeO, Fe₃O₄ and Ni₂O₃.

2. Disc according to claim 1, wherein said surface coating (3) consists only of a mixture of one or more aluminium oxides and one or more titanium oxides, wherein preferably said surface coating (3) consists of 70% to 95% by weight of alumina (Al₂O₃) and the remaining of titanium dioxide (TiO2), preferably 85% to 90% by weight of alumina (Al2O3) and the remaining of titanium dioxide (TiO₂).

3. Disc according to claim 1, wherein said surface coating (3) consists of:
- 55% to 85% by weight of one or more aluminium oxides;
- 10% to 40% by weight of one or more titanium oxides; and
- 5% to 35% by weight of one or more oxides selected from the group consisting of manganese oxides, iron oxides and nickel oxides, preferably MnO₂, Fe₃O₄ and Ni₂O₃.
wherein preferably said surface coating (3) consists of:
- 70% to 85% by weight of alumina (Al₂O₃);
- 10% to 25% by weight of titanium dioxide (TiO₂);
- 5% to 20% of one or more oxides selected from the group consisting of MnO, MnO₂, Mn₂O₃, FeO, Fe₃O₄ and Ni₂O₃.

4. Disc according to any one of the preceding claims, wherein said surface coating (3) has a black or blackish or in any case darker colour than the starting substrate **and/or** wherein said surface coating (3) has a micro-hardness between 1100 and 1300 HV₃₀₀ **and/or** wherein the surface coating (3) has a thickness between 10µm and 500um, and preferably between 30µm and 350µm, and even more preferably between 50µm and 250µm.

5. Disc according to any one of the preceding claims, wherein the surface coating (3) is a layer obtained by the deposition technique APS (Atmospheric Plasma Spray), HVOF (High Velocity Oxygen Fuel), HVAF (High Velocity Air Fuel), KM (Kinetic Metallization), laser cladding or cold spray.

6. Disc according to any one of the preceding claims, wherein the surface coating (3) is in contact with the braking surface of the braking band.

7. Disc according to any one of claims 1 to 5, comprising a base coating (30) which is arranged below said surface coating (3) and is in direct contact with the braking surface of the braking band, said base coating (30) consisting of nickel and/or nickel carbides and/or aluminium and/or aluminium oxides, wherein preferably the base coating (30) consists of:
- **either** 75% to 95% by weight of nickel and/or nickel carbides and the remaining of aluminium and/or aluminium oxides, preferably 90% to 95% by weight of nickel and/or nickel carbides and the remaining of aluminium and/or aluminium oxides
- **or** 100% by weight of nickel and/or nickel carbides or 100% by weight of aluminium and/or aluminium oxides;
and/or wherein preferably the base coating (30) has a thickness between 10µm and 500um, and preferably between 30µm and 350µm, and even more preferably between 50µm and 150µm;
and/or wherein preferably the base coating (30) is a layer obtained by the deposition technique APS (Atmospheric Plasma Spray), HVOF (High Velocity Oxygen Fuel), HVAF (High Velocity Air Fuel), KM (Kinetic Metallization), laser cladding or cold spray.

8. Method for making a brake disc for disc brakes, in particular for motorcycles, comprising the following operating steps:
a) preparing a brake disc, comprising a braking band (2) provided with two opposite braking surfaces (2a, 2b), each of which at least partially defines one of the two main faces of the disc, the braking band being made of grey cast iron or steel, preferably stainless steel;
b) depositing on the brake disc a layer of particulate material based on a mixture of one or more aluminium oxides and one or more titanium oxides, forming a surface coating (3) covering at least one of the two braking surfaces of the braking band, said surface coating (3) having a darker colour with respect to the steel of the braking band (2),
**characterised in that** the particulate material forming said surface coating (3) consists of:
- 55% to 95% by weight of one or more aluminium oxides;
- 5% to 45% by weight of one or more titanium oxides; and
- 0% to 40% by weight of one or more oxides selected from the group consisting of manganese oxides, iron oxides and nickel oxides, preferably MnO, MnO₂, Mn₂O₃, FeO, Fe₃O₄ and Ni₂O₃.

9. Method according to claim 8, wherein said particulate material forming said surface coating (3) consists only of a mixture of one or more aluminium oxides and one or more titanium oxides, wherein preferably said particulate material deposited in the deposition step b) to make the surface coating (3) consists of 70% to 95% by weight of alumina (Al₂O₃) and the remaining of titanium dioxide (TiO₂), preferably 85% to 90% by weight of alumina (Al₂O₃) and the remaining of titanium dioxide (TiO₂).

10. Method according to claim 8, wherein the particulate material deposited in the deposition step b) to make the surface coating (3) consists of:
- 55% to 85% by weight of one or more aluminium oxides;
- 10% to 40% by weight of one or more titanium oxides; and
- 5% to 35% by weight of one or more oxides selected from the group consisting of manganese oxides, iron oxides and nickel oxides, preferably MnO, MnO₂, Mn₂O₃, FeO, Fe₃O₄ and Ni₂O₃, wherein preferably the particulate material deposited in the deposition step b) to make the surface coating (3) consists of:
- 70% to 85% by weight of alumina (Al₂O₃),
- 10% to 25% by weight of titanium dioxide (TiO₂);
- 5% to 20% of one or more oxides selected from the group consisting of MnO, MnO₂, Mn₂O₃, FeO, Fe₃O₄ and Ni₂O₃.

11. Method according to any one of claims 8 to 10, wherein said surface coating (3) has a black or blackish or in any case darker colour than the starting substrate and/or wherein said surface coating (3) has a micro-hardness between 1100 and 1300 HV₃₀₀ and/or wherein the surface coating (3) has a thickness between 10µm and 500um, and preferably between 30µm and 350µm, and even more preferably between 50µm and 250µm.

12. Method according to any one of claims 8 to 11, wherein the surface coating (3) is obtained by the deposition technique APS (Atmospheric Plasma Spray), HVOF (High Velocity Oxygen Fuel), HVAF (High Velocity Air Fuel), KM (Kinetic Metallization), laser cladding or cold spray.

13. Method according to any one of claims 8 to 12, wherein the surface coating (3) is obtained by depositing the particulate material in direct contact with the braking surface of the braking band

14. Method according to any one of claims 8 to 12, comprising a step c) of depositing on the disc a layer of particulate material consisting of nickel and/or nickel carbides and/or aluminium and/or aluminium oxides, forming a base coating (30) covering at least one of the two braking surfaces of the braking band in direct contact therewith, wherein said step c) being conducted before said step b), said surface coating (3) being formed above said base coating (30)
wherein preferably the particulate material deposited in the deposition step c) to make the base coating (30) consists of:
- either 75% to 95% by weight of nickel and/or nickel carbides and the remaining of aluminium and/or aluminium oxides, preferably 90% to 95% by weight of nickel and/or nickel carbides and the remaining of aluminium and/or aluminium oxides
- or 100% by weight of nickel and/or nickel carbides or 100% by weight of aluminium and/or aluminium oxides
and/or wherein the base coating (30) has a thickness between 10µm and 500µm, and preferably between 30µm and 350µm, and even more preferably between 50µm and 150µm
**and/or** wherein the base coating (30) is obtained by the deposition technique APS (Atmospheric Plasma Spray), HVOF (High Velocity Oxygen Fuel), HVAF (High Velocity Air Fuel), KM (Kinetic Metallization), laser cladding or cold spray.

15. Method according to any one of claims 8 to 14, comprising a step d) of preparing the disc surface (1) before carrying out step b) or step c) if envisaged
**and/or** comprising a step e) of surface finishing said surface coating (3).

## Patentansprüche

1. Bremsscheibe für Scheibenbremse, insbesondere für Motorräder oder Kraftfahrzeuge, umfassend ein Bremsband (2), der mit zwei gegenüberliegenden Bremsflächen (2a, 2b) versehen ist, von denen jede mindestens teilweise eine der zwei Hauptseiten der Scheibe (1) definiert, wobei das Bremsband (2) aus Grauguss oder Stahl, vorzugsweise Edelstahl, hergestellt wird, wobei die Scheibe eine Oberflächenbeschichtung (3) umfasst, die mindestens eine der zwei Bremsflächen des Bremsbandes bedeckt,
**dadurch gekennzeichnet, dass** die Oberflächenbeschichtung (3) auf einem Gemisch aus einem oder mehreren Aluminiumoxiden und einem oder mehreren Titanoxiden basiert, wobei die Oberflächenbeschichtung (3) eine dunklere Farbe im Vergleich zu dem Stahl oder dem Grauguss des Bremsbandes (2) aufweist und dass die Oberflächenbeschichtung (3):
- 55% bis 95 Gew.-% aus einem oder mehreren Aluminiumoxiden;
- 5% bis 45 Gew.-% aus einem oder mehreren Titanoxiden; und
- 0% bis 40 Gew.-% aus einem oder mehreren Oxiden, die aus der Gruppe bestehend aus Manganoxiden, Eisenoxiden und Nickeloxiden, vorzugsweise MnO, MnO₂, Mn₂O₃, FeO, Fe₃Q₄ und Ni₂O₃ ausgewählt werden, besteht.

2. Scheibe nach Anspruch 1, wobei die Oberflächenbeschichtung (3) ausschließlich aus einem Gemisch aus einem oder mehreren Aluminiumoxiden und einem oder mehreren Titanoxiden besteht, wobei vorzugsweise die Oberflächenbeschichtung (3) 70% bis 95 Gew.-% aus Aluminiumoxid (Al₂O₃) und der Rest aus Titanoxid (TiO₂) besteht, vorzugsweise 85% bis 90 Gew.-% aus Aluminiumoxid (Al₂O₃) und der Rest aus Titanoxid (TiO₂) besteht.

3. Scheibe nach Anspruch 1, wobei die Oberflächenbeschichtung (3):
- 55% bis 85 Gew.-% aus einem oder mehreren Aluminiumoxiden;
- 10% bis 40 Gew.-% aus einem oder mehreren Titanoxiden; und
- 5% bis 35 Gew.-% aus einem oder mehreren Oxiden, die aus der Gruppe bestehend aus Manganoxiden, Eisenoxiden und Nickeloxiden, vorzugsweise MnO₂, Fe₃Q₄ und Ni₂O₃ ausgewählt werden, besteht,
wobei vorzugsweise die Oberflächenbeschichtung (3):
- 70% bis 85 Gew.-% aus Aluminiumoxid (Al₂O₃);
- 10% bis 25 Gew.-% aus Titanoxid (TiO₂);
- 5% bis 20 Gew.-% aus einem oder mehreren Oxiden, die aus der Gruppe bestehend aus MnO, MnO₂, Mn₂O₃, FeO, Fe₃Q₄ und Ni₂O₃ ausgewählt werden, besteht.

4. Scheibe nach einem der vorhergehenden Ansprüche, wobei die Oberflächenbeschichtung (3) eine schwarze oder schwärzliche oder jedenfalls dunklere Farbe als das Ausgangssubstrat aufweist und/oder wobei die Oberflächenbeschichtung (3) eine Mikrohärte zwischen 1100 und 1300 HV₃₀₀ aufweist und/oder wobei die Oberflächenbeschichtung (3) eine Dicke zwischen 10µm und 500µm, und vorzugsweise zwischen 30µm und 350µm und noch bevorzugter zwischen 50µm und 250µm aufweist.

5. Scheibe nach einem der vorhergehenden Ansprüche, wobei die Oberflächenbeschichtung (3) eine Schicht ist, die durch die Abscheidungstechnik APS (Atmospherische Plasmaspritzen - englisch Atmospheric Plasma Spray), HVOF (Hochgeschwindigkeits-Sauerstoff-Flammspritzen - englisch High Velocity Oxygen Fuel), HVAF (Hochgeschwindigkeits-Luft-Flammspritzen - englisch High Velocity Air Fuel), KM (Kinetische Metallisierung - englisch Kinetic Metallization), Laserauftragschweißen oder Kaltgasspritzen erhalten wird.

6. Scheibe nach einem der vorhergehenden Ansprüche, wobei die Oberflächenbeschichtung (3) in Kontakt mit der Bremsfläche des Bremsbandes steht.

7. Scheibe nach einem der Ansprüche 1 bis 5, umfassend eine Grundbeschichtung (30), die unterhalb der Oberflächenbeschichtung (3) angeordnet ist und in direktem Kontakt mit der Bremsfläche des Bremsbandes steht, wobei die Grundbeschichtung (30) aus Nickel und/oder Nickelcarbiden und/oder Aluminium und/oder Aluminiumoxiden besteht, wobei vorzugsweise die Grundbeschichtung (30):
- entweder 75% bis 95 Gew.-% aus Nickel und/oder Nickelcarbiden und der Rest aus Aluminium und/oder Aluminiumoxiden, vorzugsweise 90% bis 95 Gew.-% aus Nickel und/oder Nickelcarbiden und der Rest aus Aluminium und/oder Aluminiumoxiden besteht
oder 100 Gew.-% aus Nickel und/oder Nickelcarbiden oder 100 Gew.-% aus Aluminium und/oder Aluminiumoxiden besteht;
und/oder wobei vorzugsweise die Grundbeschichtung (30) eine Dicke zwischen 10µm und 500µm, vorzugsweise zwischen 30µm und 350µm und noch bevorzugter zwischen 50µm und 150µm aufweist;
und/oder wobei vorzugsweise die Grundbeschichtung (30) eine Schicht ist, die durch die Abscheidungstechnik APS (Atmospherische Plasmaspritzen - englisch Atmospheric Plasma Spray), HVOF (Hochgeschwindigkeits-Sauerstoff-Flammspritzen - englisch High Velocity Oxygen Fuel), HVAF (Hochgeschwindigkeits-Luft-Flammspritzen - englisch High Velocity Air Fuel), KM (Kinetische Metallisierung - englisch Kinetic Metallization), Laserauftragschweißen oder Kaltgasspritzen erhalten wird.

8. Verfahren zur Herstellung einer Bremsscheibe für Scheibenbremsen, insbesondere für Motorräder, umfassend die folgenden Arbeitsschritte:
a) Vorbereiten einer Bremsscheibe, umfassend ein Bremsband (2), die mit zwei gegenüberliegenden Bremsflächen (2a, 2b) versehen ist, von denen jede mindestens teilweise eine der zwei Hauptseiten der Scheibe definiert, wobei das Bremsband aus Grauguss oder Stahl, vorzugsweise Edelstahl, hergestellt wird;
b) Abscheiden auf der Bremsscheibe einer Schicht aus Teilchenmaterial, das auf einem Gemisch aus einem oder mehreren Aluminiumoxiden und einem oder mehreren Titanoxiden basiert, indem eine Oberflächenbeschichtung (3) gebildet wird, die mindestens eine der zwei Bremsflächen des Bremsbandes bedeckt, wobei die Oberflächenbeschichtung (3) eine dunklere Farbe im Vergleich zu dem Stahl des Bremsbandes (2) aufweist,
**dadurch gekennzeichnet, dass**
das Teilchenmaterial, das die Oberflächenbeschichtung (3) bildet:
- 55% bis 95 Gew.-% aus einem oder mehreren Aluminiumoxiden;
- 5 % bis 45 Gew.-% aus einem oder mehreren Titanoxiden; und
- 0% bis 40 Gew.-% aus einem oder mehreren Oxiden, die aus der Gruppe bestehend aus Manganoxiden, Eisenoxiden und Nickeloxiden, vorzugsweise MnO, MnO₂, Mn₂O₃, FeO, Fe₃Q₄ und Ni₂O₃ ausgewählt werden, besteht.

9. Verfahren nach Anspruch 8, wobei das Teilchenmaterial, das die Oberflächenbeschichtung (3) bildet, ausschließlich aus einem Gemisch aus einem oder mehreren Aluminiumoxiden und einem oder mehreren Titanoxiden besteht, wobei vorzugsweise das Teilchenmaterial, das in dem Abscheidungsschritt b) zur Herstellung der Oberflächenbeschichtung (3) abgeschieden wird, 70% bis 95 Gew.-% aus Aluminiumoxid (Al₂O₃) und der Rest aus Titanoxid (TiO₂) besteht, vorzugsweise 85% bis 90 Gew.-% aus Aluminiumoxid (Al₂O₃) und der Rest aus Titanoxid (TiO₂) besteht.

10. Verfahren nach Anspruch 8, wobei das Teilchenmaterial, das in dem Abscheidungsschritt b) zur Herstellung der Oberflächenbeschichtung (3) abgeschieden wird:
- 55% bis 85 Gew.-% aus einem oder mehreren Aluminiumoxiden;
- 10% bis 40 Gew.-% aus einem oder mehreren Titanoxiden; und
- 5% bis 35 Gew.-% aus einem oder mehreren Oxiden, die aus der Gruppe bestehend aus Manganoxiden, Eisenoxiden und Nickeloxiden, vorzugsweise MnO, MnO₂, Mn₂O₃, FeO, Fe₃Q₄ und Ni₂O₃ ausgewählt werden, besteht,
wobei vorzugsweise das Teilchenmaterial, das in dem Abscheidungsschritt b) zur Herstellung der Oberflächenbeschichtung (3) abgeschieden wird:
70% bis 85 Gew.-% aus Aluminiumoxid (Al₂O₃),
10% bis 25 Gew.-% aus Titanoxid (TiO₂);
5% bis 20 Gew.-% aus einem oder mehreren Oxiden, die aus der Gruppe bestehend aus MnO, MnO₂, Mn₂O₃, FeO, Fe₃Q₄ und Ni₂O₃ ausgewählt werden, besteht.

11. Verfahren nach einem der Ansprüche 8 bis 10, wobei die Oberflächenbeschichtung (3) eine schwarze oder schwärzliche oder jedenfalls dunklere Farbe als das Ausgangssubstrat aufweist und/oder wobei die Oberflächenbeschichtung (3) eine Mikrohärte zwischen 1100 und 1300 HV₃₀₀ aufweist und/oder wobei die Oberflächenbeschichtung (3) eine Dicke zwischen 10µm und 500µm, und vorzugsweise zwischen 30µm und 350µm und noch bevorzugter zwischen 50µm und 250µm aufweist.

12. Verfahren nach einem der Ansprüche 8 bis 11, wobei die Oberflächenbeschichtung (3) durch die Abscheidungstechnik APS (Atmospherische Plasmaspritzen - englisch Atmospheric Plasma Spray), HVOF (Hochgeschwindigkeits-Sauerstoff-Flammspritzen - englisch High Velocity Oxygen Fuel), HVAF (Hochgeschwindigkeits-Luft-Flammspritzen - englisch High Velocity Air Fuel), KM (Kinetische Metallisierung - englisch Kinetic Metallization), Laserauftragschweißen oder Kaltgasspritzen erhalten wird.

13. Verfahren nach einem der Ansprüche 8 bis 12, wobei die Oberflächenbeschichtung (3) durch Abscheiden des Teilchenmaterials in direktem Kontakt mit der Bremsfläche des Bremsbandes erhalten wird.

14. Verfahren nach einem der Ansprüche 8 bis 12, umfassend einen Schritt c) von Abscheiden auf der Scheibe einer Schicht aus Teilchenmaterial bestehend aus Nickel und/oder Nickelcarbiden und/oder Aluminium und/oder Aluminiumoxiden, indem eine Grundbeschichtung (30) gebildet wird, die mindestens eine der zwei Bremsflächen des Bremsbandes bedeckt und in direktem Kontakt damit steht, wobei der Schritt c) vor dem Schritt b) durchgeführt wird, wobei die Oberflächenbeschichtung (3) oberhalb der Grundbeschichtung (30) gebildet wird
wobei vorzugsweise das Teilchenmaterial, das in dem Abscheidungsschritt c) zur Herstellung der Grundbeschichtung (30) abgeschieden wird:
entweder 75% bis 95 Gew.-% aus Nickel und/oder Nickelcarbiden und der Rest aus Aluminium und/oder Aluminiumoxiden, vorzugsweise 90% bis 95 Gew.-% aus Nickel und/oder Nickelcarbiden und der Rest aus Aluminium und/oder Aluminiumoxiden besteht
oder 100 Gew.-% aus Nickel und/oder Nickelcarbiden oder 100 Gew.-% aus Aluminium und/oder Aluminiumoxiden besteht
und/oder wobei die Grundbeschichtung (30) eine Dicke zwischen 10µm und 500µm, und vorzugsweise zwischen 30µm und 350µm und noch bevorzugter zwischen 50µm und 150µm aufweist
und/oder wobei die Grundbeschichtung (30) durch die Abscheidungstechnik APS (Atmospherische Plasmaspritzen - englisch Atmospheric Plasma Spray), HVOF (Hochgeschwindigkeits-Sauerstoff-Flammspritzen - englisch High Velocity Oxygen Fuel), HVAF (Hochgeschwindigkeits-Luft-Flammspritzen - englisch High Velocity Air Fuel), KM (Kinetische Metallisierung - englisch Kinetic Metallization), Laserauftragschweißen oder Kaltgasspritzen erhalten wird.

15. Verfahren nach einem der Ansprüche 8 bis 14, umfassend einen Schritt d) von Vorbereiten der Scheibenoberfläche (1) vor Durchführen des Schrittes b) oder des Schrittes e), sofern vorgesehen,
und/oder umfassend einen Schritt e) von Oberflächenfinish der Oberflächenbeschichtung (3).

## Revendications

1. Disque de frein pour frein à disque, en particulier pour motocyclettes ou véhicules automobiles, comprenant une bande de freinage (2), pourvue de deux surfaces de freinage opposées (2a, 2b), chacune définissant au moins partiellement l'une des deux faces principales du disque (1), la bande de freinage (2) étant réalisée en fonte grise ou en acier, de préférence en acier inoxydable, ledit disque comprenant un revêtement de surface (3) recouvrant au moins l'une des deux surfaces de freinage de la bande de freinage,
**caractérisé en ce que** ledit revêtement de surface (3) est à base d'un mélange d'un ou plusieurs oxydes d'aluminium et d'un ou plusieurs oxydes de titane, ledit revêtement de surface (3) ayant une couleur plus sombre par rapport à l'acier ou à la fonte grise de la bande de freinage (2)
et **en ce que** ledit revêtement de surface (3) consiste en :
- 55 % à 95 % en poids d'un ou plusieurs oxydes d'aluminium ;
- 5 % à 45 % en poids d'un ou plusieurs oxydes de titane ; et
- 0 % à 40 % en poids d'un ou plusieurs oxydes sélectionnés dans le groupe constitué par les oxydes de manganèse, les oxydes de fer et les oxydes de nickel, de préférence MnO, MnO₂, Mn₂O₃, FeO, Fe₃O₄ et Ni₂O₃.

2. Disque selon la revendication 1, dans lequel ledit revêtement de surface (3) consiste uniquement en un mélange d'un ou plusieurs oxydes d'aluminium et d'un ou plusieurs oxydes de titane, dans lequel de préférence ledit revêtement de surface (3) consiste en 70 % à 95 % en poids d'alumine (Al₂O₃) et le reste en dioxyde de titane (TiO2), de préférence 85 % à 90 % en poids d'alumine (A12O3) et le reste en dioxyde de titane (TiO₂).

3. Disque selon la revendication 1, dans lequel ledit revêtement de surface (3) consiste en :
- 55 % à 85 % en poids d'un ou plusieurs oxydes d'aluminium ;
- 10 % à 40 % en poids d'un ou plusieurs oxydes de titane ; et
- 5 % à 35 % en poids d'un ou plusieurs oxydes sélectionnés dans le groupe constitué par les oxydes de manganèse, les oxydes de fer et les oxydes de nickel, de préférence MnO₂, Fe₃O₄ et Ni₂O₃
dans lequel de préférence ledit revêtement de surface (3) consiste en :
- 70 % à 85 % en poids d'alumine (Al2O3) ;
- 10 % à 25 % en poids de dioxyde de titane (TiO2) ;
- 5 % à 20 % en poids d'un ou plusieurs oxydes sélectionnés dans le groupe constitué par MnO, MnO₂, Mn₂O₃, FeO, Fe₃O₄ et Ni₂O₃.

4. Disque selon l'une quelconque des revendications précédentes, dans lequel ledit revêtement de surface (3) a une couleur noire ou noirâtre ou en tout cas plus sombre que le substrat de départ et/ou dans lequel ledit revêtement de surface (3) a une micro-dureté comprise entre 1100 et 1300 HV300 et/ou dans lequel le revêtement de surface (3) a une épaisseur comprise entre 10µm et 500µm, et de préférence entre 30µm et 350µm, et encore plus préférablement entre 50µm et 250µm.

5. Disque selon l'une quelconque des revendications précédentes, dans lequel le revêtement de surface (3) est une couche obtenue par la technique de dépôt APS (Atmospheric Plasma Spray), HVOF (High Velocity Oxygen Fuel), HVAF (High Velocity Air Fuel), KM (Kinetic Metallization), rechargement laser ou projection à froid.

6. Disque selon l'une quelconque des revendications précédentes, dans lequel le revêtement de surface (3) est en contact avec la surface de freinage de la bande de freinage.

7. Disque selon l'une quelconque des revendications 1 à 5, comprenant un revêtement de base (30) disposé au-dessous dudit revêtement de surface (3) et en contact direct avec la surface de freinage de la bande de freinage, ledit revêtement de base (30) consistant en nickel et/ou carbures de nickel et/ou aluminium et/ou oxydes d'aluminium, dans lequel de préférence le revêtement de base (30) consiste en :
- **soit** 75 % à 95 % en poids de nickel et/ou carbures de nickel et le reste en aluminium et/ou oxydes d'aluminium, de préférence 90 % à 95 % en poids de nickel et/ou carbures de nickel et le reste en aluminium et/ou oxydes d'aluminium
- **soit** 100 % en poids de nickel et/ou carbures de nickel ou 100 % en poids d'aluminium et/ou oxydes d'aluminium ;
et/ou dans lequel de préférence le revêtement de base (30) a une épaisseur comprise entre 10µm et 500µm, et de préférence entre 30µm et 350µm, et encore plus préférablement entre 50µm et 150µm ;
et/ou dans lequel de préférence le revêtement de base (30) est une couche obtenue par la technique de dépôt APS (Atmospheric Plasma Spray), HVOF (High Velocity Oxygen Fuel), HVAF (High Velocity Air Fuel), KM (Kinetic Metallization), rechargement laser ou projection à froid.

8. Procédé pour réaliser un disque de frein pour freins à disque, en particulier pour motocyclettes, comprenant les étapes opératoires suivantes :
a) préparer un disque de frein, comprenant une bande de freinage (2) pourvue de deux surfaces de freinage opposées (2a, 2b), chacune définissant au moins partiellement l'une des deux faces principales du disque, la bande de freinage étant réalisée en fonte grise ou en acier, de préférence en acier inoxydable ;
b) déposer sur le disque de frein une couche de matériau particulaire à base d'un mélange d'un ou plusieurs oxydes d'aluminium et d'un ou plusieurs oxydes de titane, formant un revêtement de surface (3) recouvrant au moins l'une des deux surfaces de freinage de la bande de freinage, ledit revêtement de surface (3) ayant une couleur plus sombre par rapport à l'acier de la bande de freinage (2),
**caractérisé en ce que**
le matériau particulaire formant ledit revêtement de surface (3) consiste en :
- 55 % à 95 % en poids d'un ou plusieurs oxydes d'aluminium ;
- 5 % à 45 % en poids d'un ou plusieurs oxydes de titane ; et
- 0 % à 40 % en poids d'un ou plusieurs oxydes sélectionnés dans le groupe constitué par les oxydes de manganèse, les oxydes de fer et les oxydes de nickel, de préférence MnO, MnO₂, Mn₂O₃, FeO, Fe₃O₄ et Ni₂O₃.

9. Procédé selon la revendication 8, dans lequel ledit matériau particulaire formant ledit revêtement de surface (3) consiste uniquement en un mélange d'un ou plusieurs oxydes d'aluminium et d'un ou plusieurs oxydes de titane, dans lequel de préférence ledit matériau particulaire déposé à l'étape de dépôt b) pour réaliser le revêtement de surface (3) consiste en 70 % à 95 % en poids d'alumine (Al₂O₃) et le reste en dioxyde de titane (TiO₂), de préférence 85 % à 90 % en poids d'alumine (Al₂O₃) et le reste en dioxyde de titane (TiO₂).

10. Procédé selon la revendication 8, dans lequel le matériau particulaire déposé à l'étape de dépôt b) pour réaliser le revêtement de surface (3) consiste en :
- 55 % à 85 % en poids d'un ou plusieurs oxydes d'aluminium ;
- 10 % à 40 % en poids d'un ou plusieurs oxydes de titane ; et
- 5 % à 35 % en poids d'un ou plusieurs oxydes sélectionnés dans le groupe constitué par les oxydes de manganèse, les oxydes de fer et les oxydes de nickel, de préférence MnO, MnO₂, Mn₂O₃, FeO, Fe₃O₄ et Ni₂O₃,
dans lequel de préférence le matériau particulaire déposé à l'étape de dépôt b) pour réaliser le revêtement de surface (3) consiste en :
- 70 % à 85 % en poids d'alumine (Al₂O₃),
- 10 % à 25 % en poids de dioxyde de titane (TiO₂) ;
- 5 % à 20 % en poids d'un ou plusieurs oxydes sélectionnés dans le groupe constitué par MnO, MnO₂, Mn₂O₃, FeO, Fe₃O₄ et Ni₂O₃.

11. Procédé selon l'une quelconque des revendications 8 à 10, dans lequel ledit revêtement de surface (3) a une couleur noire ou noirâtre ou en tout cas plus sombre que le substrat de départ et/ou dans lequel ledit revêtement de surface (3) a une micro-dureté comprise entre 1100 et 1300 HV₃₀₀ et/ou dans lequel le revêtement de surface (3) a une épaisseur comprise entre 10µm et 500µm, et de préférence entre 30µm et 350µm, et encore plus préférablement entre 50µm et 250µm.

12. Procédé selon l'une quelconque des revendications 8 à 11, dans lequel le revêtement de surface (3) est obtenu par la technique de dépôt APS (Atmospheric Plasma Spray), HVOF (High Velocity Oxygen Fuel), HVAF (High Velocity Air Fuel), KM (Kinetic Metallization), rechargement laser ou projection à froid.

13. Procédé selon l'une quelconque des revendications 8 à 12, dans lequel le revêtement de surface (3) est obtenu en déposant le matériau particulaire en contact direct avec la surface de freinage de la bande de freinage

14. Procédé selon l'une quelconque des revendications 8 à 12, comprenant une étape c) consistant à déposer sur le disque une couche de matériau particulaire consistant en nickel et/ou carbures de nickel et/ou aluminium et/ou oxydes d'aluminium, formant un revêtement de base (30) recouvrant au moins l'une des deux surfaces de freinage de la bande de freinage en contact direct avec celle-ci, ladite étape c) étant réalisée avant ladite étape b), ledit revêtement de surface (3) étant formé au-dessus dudit revêtement de base (30)
dans lequel de préférence le matériau particulaire déposé à l'étape de dépôt c) pour réaliser le revêtement de base (30) consiste en :
- soit 75 % à 95 % en poids de nickel et/ou carbures de nickel et le reste en aluminium et/ou oxydes d'aluminium, de préférence 90 % à 95 % en poids de nickel et/ou carbures de nickel et le reste en aluminium et/ou oxydes d'aluminium
- soit 100 % en poids de nickel et/ou carbures de nickel ou 100 % en poids d'aluminium et/ou oxydes d'aluminium
et/ou dans lequel le revêtement de base (30) a une épaisseur comprise entre 10µm et 500µm, et de préférence entre 30µm et 350µm, et encore plus préférablement entre 50µm et 150µm
et/ou dans lequel le revêtement de base (30) est obtenu par la technique de dépôt APS (Atmospheric Plasma Spray), HVOF (High Velocity Oxygen Fuel), HVAF (High Velocity Air Fuel), KM (Kinetic Metallization), rechargement laser ou projection à froid.

15. Procédé selon l'une quelconque des revendications 8 à 14, comprenant une étape d) consistant à préparer la surface du disque (1) avant d'effectuer l'étape b) ou l'étape e) si prévue
et/ou comprenant une étape e) de finition de surface dudit revêtement de surface (3).
